**Europäisches Patentamt**

**European Patent Office**

**Office européen des brevets**

(19)

(11) **EP 1 585 059 A2**

(12) **EUROPÄISCHE PATENTANMELDUNG**

(43) Veröffentlichungstag:
**12.10.2005 Patentblatt 2005/41**

(51) Int Cl.⁷: **G06T 7/20**

(21) Anmeldenummer: **05004876.8**

(22) Anmeldetag: **05.03.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **07.04.2004 DE 102004017145**

(71) Anmelder: **Micronas GmbH**
**79108 Freiburg (DE)**

(72) Erfinder:
• **Schu, Markus**
**85435 Erding (DE)**

• **Tuschen, Christian**
**80687 München (DE)**
• **Hahn, Marko**
**85579 Neubiberg (DE)**
• **Kohlmeyer, Guido**
**44369 Dortmund (DE)**

(74) Vertreter: **Bickel, Michael**
**Westphal & Partner**
**Mozartstrasse 8**
**80336 München (DE)**

(54) **Verfahren und Vorrichtung zur Ermittlung von Bewegungsvektoren, die Bildbereichen eines Bildes zugeordnet sind**

(57) Die Erfindung betrifft ein Verfahren und eine Vorrichtung zur Ermittlung von Bewegungsvektoren (Vaxbx), die einzelnen Bildbereichen (AxBx) eines Bildes zugeordnet sind. Das Verfahren umfasst:

- das Unterteilen des Bildes (Px) in eine Anzahl erster Hauptblöcke (Ax) unter Verwendung eines ersten Blockrasters (R1) und Durchführen eines ersten Schätzverfahrens, um zu jedem ersten Block (Ax; A1)einen Bewegungsvektor (Vax; Va1) zur Verfügung zu stellen und das Unterteilen des Bildes wenigstens einmal in eine Anzahl weiterer Hauptblöcke (Bx) unter Verwendung eines weiteren Blockrasters (R2), dessen Lage gegenüber dem ersten Blockraster (R1) verschoben ist und Durchführen eines weiteren Schätzverfahrens, um zu jedem weiteren Hauptblock (Bx) einen Bewegungsvektor (Vbx) zur Verfügung zu stellen,

- das Erzeugen eines Bewegungsvektors (Vaxbx) zu jedem Unterblock (AxBx), der durch einen Überlappungsbereich von Hauptblöcken der wenigstens zwei Raster (R1, R2) gebildet ist, abhängig von den Bewegungsvektoren (Vax, Vbx) der dem jeweiligen Unterblock (AxBx) zugeordneten Hauptblöcke (Ax, Bx).

FIG 1

EP 1 585 059 A2

**Beschreibung**

Die vorliegende Erfindung betrifft ein Verfahren und eine Vorrichtung zur Ermittlung von Bewegungsvektoren, die jeweils einzelnen Bildbereichen in einem Bild zugeordnet sind.

In der Bildverarbeitung ist es bekannt, jeweils einzelnen Bildbereichen eines Bildes aus einer Bildfolge Bewegungsvektoren zuzuordnen, die jeweils eine Verschiebung der Position dieses Bildbereiches gegenüber einer Position diese Bildbereiches in einem vorherigen oder nachfolgenden Bild der Bildfolge angeben. Nützlich ist die hierdurch erhaltene Bewegungsinformation beispielsweise bei der Erzeugung eines oder mehrerer Zwischenbilder, die zeitlich zwischen den Bildern der Bildfolge liegen, um die Position sich bewegender Objekte in den Zwischenbildern korrekt, d.h. bewegungsrichtig darstellen zu können. Die Bewegungsinformation zu einem sich über mehrere aufeinanderfolgende Bilder bewegenden Objekt oder Bildbereich kann darüber hinaus auch für eine komprimierte Abspeicherung von Bilddaten aufeinanderfolgender Bilder verwendet werden.

Ein mögliches von mehreren Verfahren zur Erzeugung solcher Bewegungsvektoren ist das sogenannte Blockmatching-Verfahren, das beispielsweise in Blume, H.: "Nichtlineare fehlertolerante Interpolation von Zwischenbildern", Fortschrittberichte VDI, 1997, Kapitel 5.1.3, Seite 57ff., beschrieben ist. Bei diesem Verfahren wird das aktuelle Bild einer Bildfolge in eine Anzahl gleich großer Blöcke unterteilt. Zu jedem dieser Blöcke wird dann im vorherigen oder nachfolgenden Bild der Block gesucht, dessen Bildinhalt die größte Übereinstimmung mit dem Inhalt des jeweiligen Blockes des aktuellen Bildes aufweist. Der Verschiebungsvektor zwischen diesem Block des aktuellen Bildes und dem Block des vorherigen oder nachfolgenden Bildes, der die größten Übereinstimmungen mit diesem Block des aktuellen Bildes aufweist, bildet dann den Bewegungsvektor zu diesem Block des aktuellen Bildes.

Beim sogenannten Full-Search-Algorithmus wird hierbei jeder Block des aktuellen Bildes mit jedem Block des vorherigen oder nachfolgenden Bildes verglichen, um die Bewegungsvektoren der einzelnen Bereiche zu ermitteln. Zur Reduzierung des erheblichen Rechenaufwandes, der beim Full-Search-Algorithmus erforderlich ist, sind weiterhin prädiktive Schätzverfahren bekannt, bei denen bei der Ermittlung des Bewegungsvektors zu einem Block Bewegungsinformationen aus vorherigen Bewegungsschätzungen berücksichtigt werden.

Die Qualität der Bewegungsschätzung mittels Blockschätzverfahren ist wesentlich von der Blockauflösung, d.h. der Größe der einzelnen Blöcke abhängig. Die Qualität ist dabei umso größer je kleiner die einzelnen Blöcke sind, je besser die Auflösung des Bildes in einzelnen Blöcken also ist und je mehr Bewegungsvektoren pro Bild somit ermittelt werden. Umgekehrt steigt allerdings auch der Rechenaufwand mit kleiner werdender Blockgröße. Allerdings steigt auch die Fehleranfälligkeit für Schätzfehler bei kleiner werdenden Blockgrößen. Das Optimum der Blockgröße liegt daher oberhalb 4x8 (Zeilen x Pixel). Dadurch entstehen deutlich erkennbare Blockstrukturen bei der Bildverarbeitung.

Zur Erhöhung der Auflösung bei der Ermittlung von Bewegungsvektoren ist es aus der US 5,148,269 bekannt, das Bild in eine vorgegebene Anzahl von Hauptblöcken zu unterteilen und zunächst eine Blockschätzung durchzuführen, um jedem dieser Hauptblöcke einen Bewegungsvektor zuzuordnen. Jeder einzelne Hauptblock wird dann in eine Anzahl Unterblöcke unterteilt, denen jeweils ein Bewegungsvektor zugeordnet wird. Zur Erzeugung der Bewegungsvektoren der Unterblöcke werden hierbei der Bewegungsvektor des jeweiligen Hauptblockes und die Bewegungsvektoren der benachbart zu dem Hauptblock liegenden weiteren Hauptblöcke herangezogen.

Aufgabe der vorliegenden Erfindung ist es, ein Verfahren zur Ermittlung von Bewegungsvektoren zur Verfügung zu stellen, das eine erhöhte Auflösung bei einem vertretbaren Mehraufwand an Rechenleistung bietet, und eine Vorrichtung zur Durchführung eines solchen Verfahrens zur Verfügung zu stellen.

Dieses Aufgabe wird durch ein Verfahren nach Anspruch 1 und durch eine Vorrichtung nach Anspruch 14 gelöst. Vorteilhafte Ausgestaltungen der Erfindung sind Gegenstand der Unteransprüche.

Das Verfahren zur Ermittlung von Bewegungsvektoren, die jeweils einzelnen Bildbereichen eines Bildes zugeordnet sind, umfasst folgende Verfahrensschritte:

- Unterteilen des Bildes in eine Anzahl erster Hauptblöcke unter Verwendung eines ersten Blockrasters und Durchführen eines ersten Schätzverfahrens, um zu jedem ersten Block einen Bewegungsvektor zur Verfügung zu stellen,

- Unterteilen des Bildes wenigstens einmal in eine Anzahl weiterer Hauptblöcke unter Verwendung eines weiteren Blockrasters, dessen Lage gegenüber dem ersten Blockraster, vorzugsweise in horizontaler und vertikaler Richtung, versetzt ist, und Durchführen eines weiteren Schätzverfahrens, um zu jedem weiteren Hauptblock einen Bewegungsvektor zur Verfügung zu stellen,

- Unterteilen des Bildes in eine Anzahl Unterblöcke, wobei jeder der Unterblöcke durch einen Überlappungsbereich zwischen einem der Hauptblöcke des ersten Rasters und je einem der Hauptblöcke des wenigstens einen weiteren Rasters gebildet ist, und

- Erzeugen eines Bewegungsvektors zu jedem Unterblock abhängig von den Bewegungsvektoren der dem jeweiligen Unterblock zugeordneten Hauptblöcke.

Für das erste und das weitere Schätzverfahren können dabei beliebige herkömmliche Blockschätzverfahren verwendet werden, die zur Ermittlung von Bewegungsvektoren für einzelne Bildbereiche eines Bildes geeignet sind. Vorteilhafterweise werden dabei prädiktive Blockschätzverfahren wegen des im Vergleich zu Full-Search-Verfahren geringeren Rechenaufwandes bevorzugt.

Der Vorteil des erfindungsgemäßen Verfahrens besteht darin, dass bereits bei Durchführung eines Blockschätzverfahrens mit zwei zueinander versetzten Blockrastern die Auflösung des Verfahrens um einen Faktor vier gesteigert werden kann, d.h. die Größe der Blöcke, zu denen am Ende des Verfahrens jeweils ein Bewegungsvektor zur Verfügung steht, ist um einen Faktor vier kleiner als die der Hauptblöcke, für die Blockschätzverfahren durchgeführt wurden. Allgemein gilt, dass die Auflösung des Vektorfeldes, also die Anzahl der ermittelten Bewegungsvektoren pro Bild, exponentiell mit der Anzahl der durchgeführten Blockschätzverfahren steigt, wenn für jedes Blockschätzverfahren ein anderes Raster für die Unterteilung des Bildes in Hauptblöcke verwendet wird. Der Rechenaufwand nimmt hingegen nur in etwa linear mit der Anzahl der durchgeführten Blockschätzverfahren zu.

Die Abmessungen der durch das erste und das wenigstens eine weitere Raster gebildeten Hauptblöcke sind vorzugsweise jeweils gleich.

Die Verschiebung des wenigstens einen weiteren Rasters gegenüber dem ersten Raster erfolgt vorzugsweise so, dass jeweils Unterblöcke mit gleichen Abmessungen entstehen. Bei einem Verfahren, bei dem zwei aufeinanderfolgende Blockschätzverfahren unter Verwendung des ersten Rasters und eines gegenüber dem ersten Raster verschobenen zweiten Rasters durchgeführt werden, bedeutet dies, dass das zweite Raster in horizontaler Richtung um die Hälfte der horizontalen Abmessung eines Hauptblocks gegenüber dem ersten Raster verschoben ist und dass das zweite Raster in vertikaler Richtung um die Hälfte der vertikalen Abmessung eines Hauptblocks gegenüber dem ersten Raster verschoben ist.

Werden zur weiteren Steigerung der Auflösung des Vektorfeldes n Raster, mit n>2, zur Unterteilung des Bildes in gleich große Hauptblöcke unterteilt, so werden die einzelnen Raster so gewählt, dass die Abmessungen der Unterblöcke in horizontaler und vertikaler Richtung jeweils das 1/n-fache der Abmessungen der Hauptblöcke in horizontaler und vertikaler Richtung betragen.

Der Bewegungsvektor eines Unterblocks wird unter Verwendung der Bewegungsvektoren der Hauptblöcke gebildet, in deren Überlappungsbereich der jeweilige Unterblock liegt. Dies kann auf unterschiedliche Weise erfolgen, wobei vorzugsweise als Bewegungsvektor für den Unterblock einer der Bewegungsvektoren der dem Unterblock zugeordneten Hauptblöcke ausgewählt wird.

Für die Auswahl des Bewegungsvektors eines der Hauptblöcke kann dabei ein Gütemaß herangezogen werden, das jedem Bewegungsvektor während des Schätzverfahrens zugeordnet wird. Wie bereits eingangs erläutert, wird bei Blockschätzverfahren zur Ermittlung eines Bewegungsvektors zu einem Bildbereich eines aktuellen Bildes dieser Bildbereich des aktuellen Bildes mit einem Bildbereich eines vorherigen oder nachfolgenden Bildes verglichen. Für den Vergleich der Bildbereiche werden beispielsweise Bildinformationswerte, z.B. Luminanz- oder Chrominanzwerte, der Bildpunkte der zu vergleichenden Bildbereiche bildpunktweise miteinander verglichen, indem jeweils die Differenzen der Bildinformationswerte der einzelnen sich in den zu vergleichenden Bildbereichen an jeweils gleichen Positionen befindlichen Bildpunkten gebildet werden. Ein Gütemaß für den einzelnen Bewegungsvektor bildet dabei die Summe der Beträge aller dieser Differenzen oder die Summe des Quadrates aller dieser Differenzen. Die Güte des Vektors ist dabei um so größer, je kleiner dieser Wert ist.

Als Bewegungsvektor für einen Unterblock kann dabei der Hauptblock-Bewegungsvektor mit dem "besseren" Gütemaß verwendet werden.

Darüber hinaus besteht auch die Möglichkeit, jedem Bewegungsvektor eines Hauptblockes ein Gütemaß für jeden der Unterblöcke zuzuordnen. Dieses Gütemaß kann bereits während des Blockschätzverfahrens ermittelt werden, indem die Beträge oder Quadrate der Bildinformationswerte der einzelnen Bildpunkte blockweise für die einzelnen Unterblöcke aufaddiert werden. Als Bewegungsvektor für einen Unterblock wird dabei der Bewegungsvektor des Hauptblockes ausgewählt, der bezüglich des jeweiligen Unterblocks das beste Gütemaß besitzt.

Eine weitere Möglichkeit besteht darin, den Bewegungsvektor für einen Unterblock mittels eines Statistical Ordered Filter, beispielsweise eines Medianfilters, aus den Vektoren der Hauptblöcke, die den Unterblock überstreichen, zu ermitteln.

Bei einer weiteren Ausführungsform ist vorgesehen, Konvergenzkriterien für die Bewegungsvektoren der Hauptblöcke bei der Zuordnung eines dieser Bewegungsvektoren zu den Unterblöcken anzuwenden. Ein Bewegungsvektor gilt beispielsweise als konvergiert, wenn er um weniger als einen vorgegebenen Differenzvektor vom Bewegungsvektor eines benachbarten Hauptblockes abweicht.

Bei einer Ausführungsform des erfindungsgemäßen Verfahrens ist nun vorgesehen, von den wenigstens zwei Bewegungsvektoren, die einem Unterblock zugeordnet sind, den auszuwählen, der konvergiert ist. Sind mehrere Bewegungsvektoren konvergiert, so kann als weiteres Auswahlkriterium das Gütemaß herangezogen werden oder die oben erwähnte Filterung mittels eines Ordered Statistical Filters herangezogen werden.

Eine Vorrichtung zum Durchführen des erfindungsgemäßen Verfahrens umfasst:

- Mittel zum Unterteilen des Bildes in eine Anzahl erster Hauptblöcke unter Verwendung eines ersten Blockrasters und Mittel zum Durchführen eines ersten Schätzverfahrens, um zu jedem ersten Block einen Bewegungsvektor zur Verfügung zu stellen,

- Mittel zum Unterteilen des Bildes wenigstens einmal in eine Anzahl weiterer Hauptblöcke unter Verwendung eines weiteren Blockrasters, dessen Lage gegenüber dem ersten Blockraster verschoben ist und Mittel Durchführen eines weiteren Schätzverfahrens, um zu jedem weiteren Hauptblock einen Bewegungsvektor zur Verfügung zu stellen,

- Mittel zum Unterteilen des Bildes in eine Anzahl Unterblöcke, wobei jeder der Unterblöcke durch einen Überlappungsbereich zwischen einem der ersten Hauptblöcke und je einem der Hauptblöcke des wenigstens einen weiteren Rasters gebildet ist und

- Mittel zum Erzeugen eines Bewegungsvektors zu jedem Unterblock abhängig von den Bewegungsvektoren der dem jeweiligen Unterblock zugeordneten Hauptblöcke.

Die vorliegende Erfindung wird nachfolgend anhand von Figuren näher erläutert.

Figur 1 zeigt schematisch ein Bild, das unter Verwendung zweier versetzt zueinander liegender Raster in Hauptblöcke unterteilt ist.

Figur 2 zeigt einen vergrößerten Ausschnitt des Bildes gemäß Figur 1.

Figur 3 zeigt einen Ausschnitt eines Bildes das unter Verwendung von drei Blockrastern in Hauptblöcke unterteilt ist.

Figur 4 veranschaulicht eine Vorrichtung zur Durchführung des erfindungsgemäßen Verfahrens zur Ermittlung von Bewegungsvektoren.

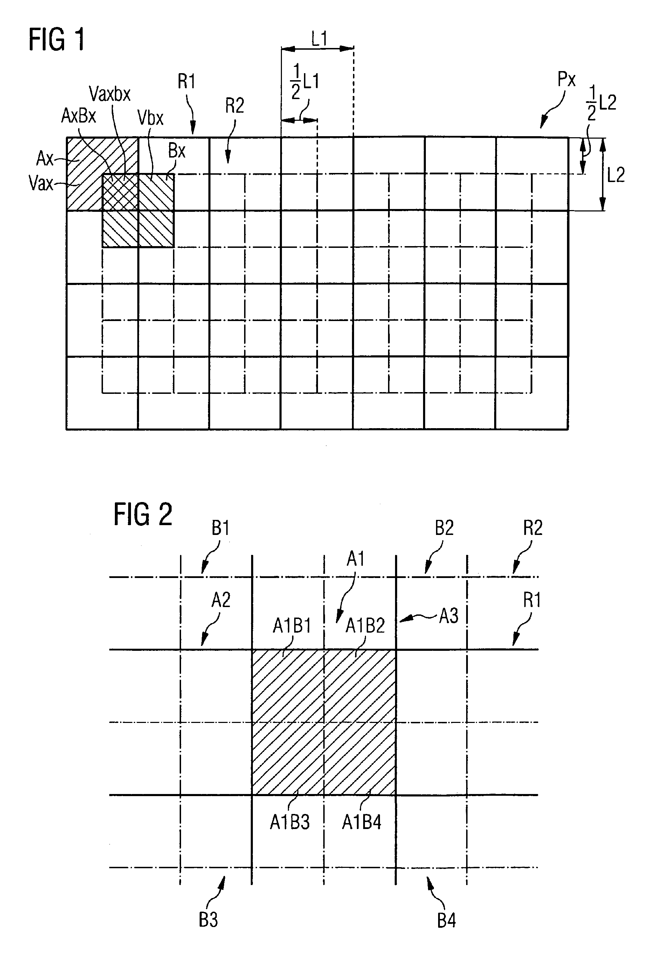

Figur 1 zeigt schematisch ein Bild Px einer Bildfolge, die in nicht näher dargestellter Weise zeitlich aufeinanderfolgend eine Anzahl jeweils gleichartig aufgebauter Bilder umfasst. Das Bild Px ist beispielsweise ein Bild einer Folge von Fernseh- oder Videobildern.

Zur Durchführung einer Bewegungsschätzung wird das Bild Px unter Verwendung eines ersten Rasters R1 in eine Anzahl gleich großer Hauptblöcke Ax unterteilt, von denen einer in Figur 1 gestrichelt markiert ist. Jedem dieser Hauptblöcke Ax des ersten Rasters R1 ist ein Bewegungsvektor zugeordnet. Dieser Bewegungsvektor beschreibt in hinlänglich bekannter Weise ein Verschiebung eines durch den jeweiligen Hauptblock Ax repräsentierten Bildinhaltes gegenüber der Position eines Hauptblockes mit demselben Bildinhalt in einem vorherigen oder nachfolgenden Bild der Bildfolge. Zur Zuordnung der Bewegungsvektoren zu den einzelnen Hauptblöcken des ersten Rasters R1 sind beliebige Blockschätzverfahren anwendbar, insbesondere solche Blockschätzverfahren, wie sie in Blume, a. a. O. beschrieben sind.

Erfindungsgemäß wird das Bild Px unter Verwendung eines zweiten Rasters R2, dessen Lage gegenüber der Lage des ersten Rasters R1 versetzt ist, in weitere Hauptblöcke Bx unterteilt, von denen einer in Figur 1 gestrichelt markiert ist. Die Abmessungen der Hauptblöcke Bx des zweiten Rasters R2 entsprechen vorzugsweise den Abmessungen der Hauptblöcke Ax des ersten Rasters R1.

Bildbereiche, in denen sich jeweils ein Hauptblock Ax des ersten Rasters R1 und ein Hauptblock Bx des zweiten Rasters R2 überlappen, bilden Unterblöcke des Bildes Px. Ein solcher Unterblock, der durch Überlappung des schraffiert dargestellten Hauptblockes des ersten Rasters R1 und des schraffiert dargestellten Hauptblockes des zweiten Rasters R2 gebildet ist, ist in Figur 1 mit dem Bezugszeichen AxBx bezeichnet.

Jedem dieser Unterblöcke AxBx wird ein eigener Bewegungsvektor Vaxbx zugeordnet, der von den Bewegungsvektoren Vax, Vbx der Hauptblöcke Ax, Bx, die den jeweiligen Unterblock AxBx bilden, abhängig ist. Wegen der zueinander versetzten Anordnung der Raster R1, R2 sind die Unterblöcke AxBx jeweils kleiner als die Hauptblöcke Ax, Bx der beiden Raster R1, R2, so dass durch Zuordnung eines eigenen Bewegungsvektors Vaxbx zu jedem Unterblock AxBx eine erhöhte Auflösung der Bewegungsschätzung resultiert. Die beiden Raster R1, R2 sind dabei vorzugsweise so gegeneinander verschoben, dass die einzelnen Unterblöcke jeweils gleich groß sind. Dies bedeutet bei jeweils gleich großen Hauptblöcken Ax, Bx der beiden Raster R1, R2, dass die beiden Raster R1, R2 in einer horizontalen Richtung des Bildes um die Hälfte der horizontalen Breite 11 eines Hauptblockes gegeneinander verschoben sind, und in einer vertikalen Richtung um die Hälfte einer vertikalen Breite 12 eines Hauptblockes gegeneinander verschoben sind.

Für die Erzeugung des Bewegungsvektors Vaxbx eines Unterblockes AxBx anhand der Bewegungsvektoren Vax, Vbx der den Unterblock bildenden Hauptblöcke Ax, Bx gibt es verschiedene Vorgehensweisen, die nachfolgend anhand von Figur 2 näher erläutert werden.

Figur 2 zeigt einen Ausschnitt eines unter Verwendung zweier zueinander versetzter Blockraster R1, R2 in Hauptblöcke unterteilten Bildes. Das Bezugszeichen A1 bezeichnet dabei einen durch das erste Raster R1 gebildeten Hauptblock, und die Bezugszeichen B1-B4 bezeichnen jeweils Hauptblöcke, die durch das zweite Raster R2 gebildet sind, und die sich jeweils teilweise mit dem Hauptblock A1 des ersten Raster R1 überlappen. Der Hauptblock A1 wird nachfolgend als "erster Hauptblock" des ersten Rasters R1 bezeichnet und die Hauptblöcke B1-B4 werden nachfolgend als "erste bis vierte Hauptblöcke" des zweiten Rasters R2 bezeichnet. Dem ersten Hauptblock A1 des ersten Rasters R1 ist ein erster Bewegungsvektor Va1 zugeordnet, der anhand eines Blockschätzverfahrens ermittelt wurde. Entsprechend sind den ersten bis vierten Hauptblöcken B1-B4 des zweiten Raster R2 Bewegungsvektoren Vbl-Vb4 zugeordnet, die anhand von Blockschätzverfahrens ermittelt wurden.

Der erste Hauptblock A1 des ersten Rasters R1 ist in vier Unterblöcke A1B1, A1B2, A1B3, A1B4 unterteilt, die jeweils durch Überlappung dieses ersten Hauptblockes A1 mit einem der ersten bis vierten Hauptblöcke B1-B4 des zweiten Rasters R2 gebildet sind. Zur Steigerung der Auflösung der Bewegungsschätzung wird jedem dieser Unterblöcke A1B1-A1B4 ein eigener Bewegungsvektor Va1b1-Va1b4 zugeordnet, der unter Verwendung der Bewegungsvektoren der beiden Hauptblöcke gebildet ist, die den jeweiligen Unterblock bilden. Das heißt, der Bewegungsvektor Va1b1 des ersten Unterblockes A1B1 ist eine Funktion des Bewegungsvektors Va1 des ersten Hauptblockes A1 des ersten Rasters R1 und des Bewegungsvektors Vb1 des ersten Hauptblockes B1 des zweiten Rasters R2, es gilt also:

$$Va1b1 = f(Va1, Vb1) \qquad (1a)$$

Entsprechend gilt für die Bewegungsvektoren der weiteren Unterblöcke:

$$Va1b2 = f(Va1, Vb2) \qquad (1b)$$

$$Va1b3 = f(Va1, Vb3) \qquad (1c)$$

$$Va1b4 = f(Va1, Vb4) \qquad (1d).$$

Bei einer Ausführungsform des erfindungsgemäßen Verfahrens ist für die Erzeugung der Bewegungsvektoren der Unterblöcke vorgesehen, jeweils einen der Bewegungsvektoren der Hauptblöcke auszuwählen, die den jeweiligen Unterblock bilden. Es gilt also:

$$Va1b1 = Va1 \text{ oder } Vb1 \qquad (2a)$$

$$Va1b2 = Va1 \text{ oder } Vb2 \qquad (2b)$$

$$Va1b3 = Va1 \text{ oder } Vb3 \qquad (2c)$$

$$Va1b4 = Va1 \text{ oder } Vb4 \qquad (2d).$$

Für die Auswahl eines der Bewegungsvektoren eines Hauptblockes besteht die Möglichkeit jedem Bewegungsvektor eines Hauptblockes ein Gütemaß zuzuordnen und als Bewegungsvektor für den Unterblock den Bewegungsvektor mit dem "besseren" Gütemaß auszuwählen. Die Erzeugung eines solchen Gütemaßes wird nachfolgend anhand des ersten Hauptblockes A1 des ersten Rasters R1 erläutert.

Im Folgenden wird angenommen, dass der Hauptblock A1 m x n Bildpunkte aufweist, und dass A1(x, y) einen beliebigen der den Hauptblock A1 bildenden Bildpunkte A1(1,1) bis A1(m,n) bezeichnet. $A1_{-va1}$ bezeichnet im Folgenden einen Hauptblock des ersten Rasters R1 in einem dem Bild mit dem Hauptblock A1 zeitlich vorausgehenden oder zeitlich nachfolgenden Bild, wobei die Position dieses Hauptblockes $A1_{-va1}$ in dem vorausgehendem oder nachfolgendem Bild um den Bewegungsvektor Va1 gegenüber der Position des Hauptblockes A1 des aktuellen Bildes verschoben ist. Dem Verschiebungsvektor Va1 wird ein Gütewert Ga1 zugeordnet, indem die einzelnen Bildpunkte A1(x, y) und $A1_{-va1}$(x, y) bildpunktweise miteinander verglichen werden. Hierzu wird die Differenz dieser einzelnen Bildpunkte gebildet, und die Beträge oder das Quadrat dieser Differenzen wird aufsummiert, es gilt also:

$$\text{Ga1} = \sum_{x=1}^{m} \sum_{y=1}^{n} \left| A1(x,y) - A1_{-Va1}(x,y) \right| \tag{3}$$

Anstelle der Betragsdifferenz können auch die Quadrate der Bildpunktdifferenzen aufsummiert werden, um den Gütewert Ga1 zu bilden, so dass gilt:

$$\text{Ga1} = \sum_{x=1}^{m} \sum_{y=1}^{n} \left[ A1(x,y) - A1_{-Va1}(x,y) \right]^2 \tag{4}.$$

In beiden Fällen gilt, dass die "Güte" des Bewegungsvektors Va1 umso besser ist, je geringer der Gütewert Ga1 ist, je geringer also die Differenz der Bildinhalte des Hauptblockes A1 und des um den Bewegungsvektor Va1 verschobenen Hauptblockes $A1_{-va1}$ ist.

Entsprechend der Erzeugung eines Gütemaßes Ga1 zu dem ersten Hauptblock A1 des ersten Rasters R1 werden Gütewerte Gb1-Gb2 für die Hauptblöcke B1-B4 des zweiten Rasters R2 ermittelt. Von den Hauptblöcken, die einen Unterblock bilden, wird dabei als Bewegungsvektor des Unterblockes der Hauptblock-Bewegungsvektor mit dem besseren Gütewert ausgewählt.

Die Gütewerte Ga1, Gb1 werden üblicherweise bereits während der Blockschätzung im Rahmen der Ermittlung des einem Hauptblock zugeordneten Bewegungsvektors ermittelt und können unmittelbar aus der Blockschätzung übernommen werden.

Bei einer anderen Ausführungsform ist vorgesehen, jedem Hauptblock-Bewegungsvektor ein Gütemaß für jeden der Unterblöcke zuzuordnen. Bezug nehmend auf das Beispiel in Figur 2 bedeutet dies, dass dem Bewegungsvektor Va1 des ersten Hauptblockes A1 vier Gütewerte zugeordnet werden, nämlich ein Gütewert $Ga1_{b1}$ für den ersten Unterblock A1B1, einen zweiten Gütewert $Ga1_{B2}$ für den zweiten Unterblock A1B2, ein dritter Gütewert $Ga1_{B3}$ für den dritten Unterblock A1B3 und ein vierter Gütewert $Ga1_{B4}$ für den vierten Unterblock A1B4. Es sei angenommen, dass die Unterblöcke A1B1-A1B4 jeweils i x j Bildpunkte aufweisen. Die einzelnen, den Unterblöcken A1B1-A1B4 zugeordneten Gütewerte $Ga1_{B1}$-$Ga1_{B4}$ berechnen sich dann gemäß:

$$\text{Ga1}_{B1} = \sum_{x=1}^{i} \sum_{y=1}^{j} \left| A1(x,y) \quad A1_{Va1}(x,y) \right| \tag{5a}$$

$$\text{Ga1}_{B2} = \sum_{x=1}^{i} \sum_{y=1}^{j} \left| A1(x+i,y) - A1_{-Va1}(x+i,y) \right| \tag{5b}$$

$$Ga1_{B3} = \sum_{x=1}^{i} \sum_{y=1}^{j} \left| A1(x, y+j) - A1_{-Va1}(x, y+j) \right|$$

$$(5c)$$

$$Ga1_{B4} = \sum_{x=1}^{i} \sum_{y=1}^{j} \left| A1(x+i, y+j) - A1_{-Va1}(x+i, y+j) \right|$$

$$(5d).$$

Anstelle der Beträge der einzelnen Bildpunktdifferenzen können entsprechend Gleichung (4) selbstverständlich auch die Quadrate der einzelnen Differenzen zur Erzeugung der jeweiligen Gütewerte erzeugt werden. Entsprechend der Erzeugung des Gütewertes $Ga1_{B1}$ für den Bewegungsvektor Va1 des ersten Hauptblockes A1 des ersten Rasters R1 wird ein entsprechender Gütewert $Gb1_{A1}$ erzeugt, der den Gütewert des Bewegungsvektors Vb1 des ersten Hauptblockes B1 des zweiten Rasters R2 für den ersten Unterblock A1B1 darstellt. Diese beiden Gütewerte werden miteinander verglichen, um als Bewegungsvektor für diesen ersten Unterblock A1B1 den Bewegungsvektor mit dem "besseren" Gütemaß zu verwenden. Bei Ermittlung der Gütemaße für die Hauptblöcke entsprechend der Gleichungen (5a)-(5d) gilt dabei, dass der Bewegungsvektor als "besser" gilt, dessen Gütemaß den kleinsten Absolutwert aufweist.

Neben der Verwendung von Gütemaßen besteht außerdem die Möglichkeit, Konvergenzkriterien bei der Auswahl der einem Unterblock zugeordneten Hauptblock-Bewegungsvektoren anzuwenden. Der Bewegungsvektor eines Hauptblockes gilt dabei als konvergiert, wenn der Betrag eines Differenzvektors zwischen diesem Hauptblock-Bewegungsvektor und einem benachbarten Hauptblock-Bewegungsvektor kleiner als ein vorgegebener Grenzwert ist. Zur Verdeutlichung der Anwendung eines solchen Konvergenzkriteriums seien der Bewegungsvektor Va1 des ersten Hauptblockes A1 des ersten Rasters R1 sowie ein Bewegungsvektor Va2 eines zu dem ersten Hauptblock A1 benachbarten Hauptblockes A2 betrachtet. Der Bewegungsvektor Va1 des ersten Hauptblockes gilt dabei als konvergiert, wenn gilt:

$$|Va1\text{-}Va2| < \Delta_{max} \qquad (6).$$

$| \, . \, |$ steht dabei für den Betrag des Differenzvektors Va1 - Va2.

Vorzugsweise werden für die Beurteilung der Konvergenz eines Bewegungsvektors eines Hauptblockes zwei benachbarte Hauptblöcke betrachtet. Für die Hauptblöcke des ersten Rasters R1 werden hierbei vorzugsweise jeweils der in Abhängigkeit der Bearbeitungsrichtung der zuvor horizontal benachbarte Hauptblock als auch der zuvor vertikal bereits bearbeitete oberhalb liegende Hauptblock
betrachtet, so dass der
Bewegungsvektor Va1 dann als konvergiert gilt, wenn folgende Bedingungen erfüllt sind:

$$|Va1\text{-}Va2| < \Delta_{max} \qquad (7a)$$

$$|Va1\text{-}Va3| < \Delta_{max} \qquad (7b)$$

Va3 bezeichnet dabei den Bewegungsvektor des oberhalb des Hauptblockes A1 liegenden Hauptblockes A3.

Für die Beurteilung der Konvergenz des Bewegungsvektors eines Hauptblockes des zweiten Rasters R2 werden vorzugsweise der rechts neben dem jeweiligen Hauptblock liegende Hauptblock und der unterhalb dieses Hauptblocks liegende Hauptblock betrachtet. So gilt beispielsweise der Bewegungsvektor Vb1 des ersten Hauptblockes B1 des zweiten Rasters R2 dann als konvergiert, wenn gilt:

$$|Vb1\text{-}Vb2| < \Delta_{max} \tag{8a}$$

$$|Vb1\text{-}Vb3| < \Delta_{max} \tag{8b}$$

Ist von zwei Hauptblock-Bewegungsvektoren, die einem Unterblock zugeordnet sind, nur einer von beiden konvergiert, so wird der konvergierte Hauptblock-Bewegungsvektor als Bewegungsvektor für den jeweiligen Unterblock ausgewählt. Sind beide Hauptblock-Bewegungsvektoren konvergiert, so wird als weiteres Auswahlkriterium beispielsweise das oben erläuterte Gütemaß angewendet, um einen der Hauptblock-Bewegungsvektoren auszuwählen.

Das erfindungsgemäße Verfahren ist selbstverständlich nicht auf die Verwendung von nur zwei räumlich gegeneinander versetzten Rastern, die jeweils Hauptblöcke des Bildes definieren, beschränkt.

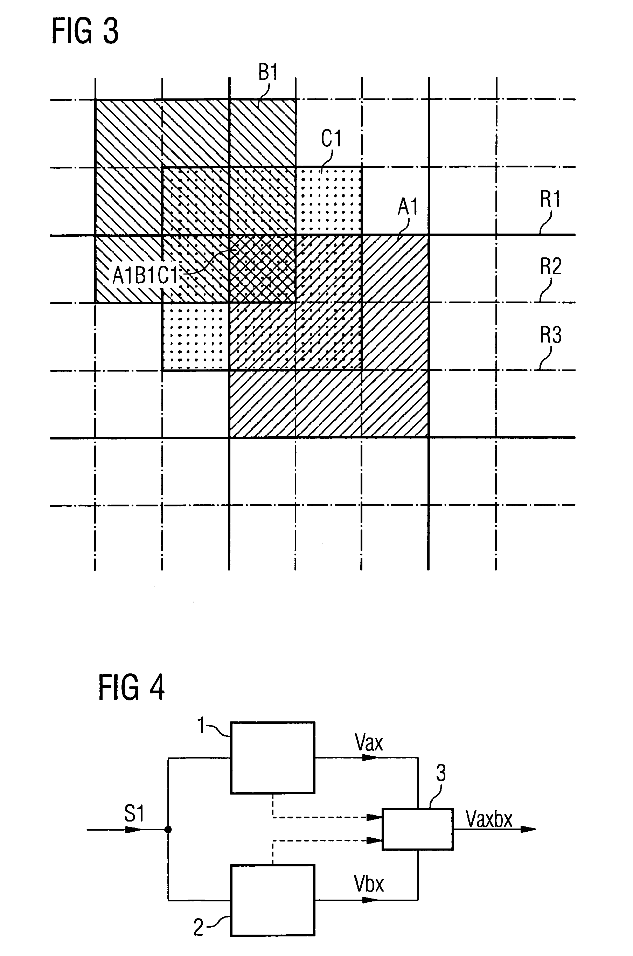

Figur 3 zeigt einen Bildausschnitt, der unter Verwendung dreier räumlich gegeneinander versetzter Raster R1, R2, R3 in Hauptblöcke unterteilt ist. A1 bezeichnet dabei einen Hauptblock des ersten Rasters R1, B1 bezeichnet einen Hauptblock des zweiten Rasters R2 und C1 bezeichnet einen Hauptblock des dritten Rasters R3. Diese drei Hauptblöcke A1, B1, C1 überlappen sich in einem Bereich, der einen Unterblock A1B1C1 bildet, und dem erfindungsgemäß ein Bewegungsvektor abhängig von Bewegungsvektoren Va1, Vb1, Vc1 der drei Hauptblöcke zugeordnet wird.

Dabei gilt bei dem erfindungsgemäßen Verfahren, dass bei Verwendung von n räumlich gegeneinander versetzen Rastern, die so versetzt gegeneinander angeordnet sind, dass gleich große Unterblöcke entstehen, eine Steigerung der Auflösung des Vektorfeldes um einen Faktor $2^n$ gegenüber der Auflösung des Vektorfeldes bei Verwendung lediglich eines Rasters erreicht wird. Der Aufwand zur Ermittlung der Bewegungsvektoren für die einzelnen Unterblöcke erhöht sich im Wesentlichen nur um den Faktor n, da der meiste Rechenaufwand für die Ermittlung der Bewegungsvektoren der Hauptblöcke aufzuwenden ist. Nach Ermittlung der Bewegungsvektoren dieser Hauptblöcke ist der verbleibende Rechenaufwand zur Auswahl eines der einem Unterblock zugeordneten Hauptblock-Bewegungsvektoren als Bewegungsvektor für diesen Unterblock vergleichsweise gering. Die Bewegungsschätzung zur Ermittlung der Bewegungsvektoren der Hauptblöcke kann parallel oder aufeinanderfolgend erfolgen.

Zur Erzeugung des Bewegungsvektors Va1b1c1 des Unterblocks A1B1C1 anhand der Bewegungsvektoren Va1, Vb1, Vc1 der diesen Unterblock A1B1C1 bildenden Hauptblöcke A1, B1, C1 kann neben den bislang erläuterten Verfahren auch eine Filterung mittels eines sogenannten Ordered Statistical Filter verwendet werden. Ein Beispiel für ein solches Ordered Statistical Filter ist ein Medianfilter. Der zu erzeugende Bewegungsvektor des Unterblockes Va1b1c1 und die Bewegungsvektoren Va1, Vb1, Vc1 der Hauptblöcke A1, B1, C1 umfassen jeweils eine horizontale und eine vertikale Komponente, die nachfolgend als x- und y-Komponente der Vektoren bezeichnet werden.

Bei einem Verfahren zu Erzeugung des Untervektors ist vorgesehen, die Hauptblock-Bewegungsvektoren Va1, Vb1, Vc1 komponentenweise einer Filterung mittels eines Ordered Statistical Filters zu unterziehen, und das Filterergebnis der jeweiligen Komponente des Untervektors zuzuordnen. Bei Verwendung eines Medianfilters gilt:

$$Va1b1c1_x = Median(Va1_x, Vb1_x, Vc1_x) \tag{9a}$$

$$Va1b1c1_y = Median(Va1_y, Vb1_y, Vc1_y) \tag{9a}$$

wobei $._x$ und $._y$ die x- und y-Komponenten der jeweiligen Vektoren bezeichnen.

Abhängig vom Ergebnis der Filterung kann sich der Unterblock-Bewegungsvektor Va1b1c1= (Va1b1c1$_x$, Va1b1c1$_y$) bei diesem Verfahren aus Komponenten unterschiedlicher Hauptblock-Bewegungsvektoren zusammensetzen.

Bei einem weiteren Verfahren ist vorgesehen, die Vektorbeträge der Hauptblock-Bewegungsvektoren Va1, Vb1, Vc1 einer Medianfilterung zu unterziehen und den Hauptblock-Bewegungsvektor als Unterblock-Bewegungsvektor auszuwählen, dessen Betrag als Ergebnis der Filterung ausgegeben wird.

Figur 3 zeigt schematisch eine Vorrichtung zur Ermittlung von Bewegungsvektoren Vaxbx von Unterblöcken, bei der die Bewegungsschätzung zur Erzeugung der Bewegungsvektoren der Hauptblöcke parallel erfolgt. Die Vorrichtung umfasst einen Eingang zur Zuführung eines Bildsignals S1, das aufeinanderfolgende Bilder einer Bildfolge repräsentiert. Die Vorrichtung umfasst eine erste Bewegungsschätzvorrichtung 1, die erste Hauptblock-Bewegungsvektoren Ax unter Verwendung eines ersten Rasters R1 zur Verfügung stellt. Außerdem umfasst die Vorrichtung eine zweite Bewegungsschätzungsvorrichtung 2, die eine Gruppe von zweiten Hauptblock-Bewegungsvektoren für Hauptblöcke eines Bildes unter Verwendung eines zweiten Rasters R2 zur Verfügung stellt. Diese Hauptblock-Bewegungsvektoren Vax, Vbx sind einer Auswahleinrichtung 3 zugeführt, die für Unterblöcke jeweils einen Bewegungsvektor Vaxbx aus den Bewegungsvektoren der Hauptblöcke, die den jeweiligen Unterblock bilden, auswählt. Als Auswahlkriterien werden durch diese Einheit 3 beispielsweise Gütemaße und/oder Konvergenzkriterien der Hauptblock-Bewegungsvektoren herangezogen, die der Einheit 3 von den Bewegungsschätzvorrichtungen 1, 2 zugeführt sind.

Bezugszeichenliste

| | |
|---|---|
| A1, B1, C1 | Hauptblöcke |
| A1B1-A1B4 | Unterblöcke |
| A1B1C1 | Unterblock |
| Ax, Bx | Hauptblöcke |
| AxBx | Unterblock |
| Px | Bild einer Bildfolge |
| R1, R2, R3 | Raster |
| Vax, Vbx | Bewegungsvektoren von Hauptblöcken |
| Vaxbx | Bewegungsvektor eines Unterblocks |
| 1,2 | Vorrichtungen zur blockweisen Bewegungsschätzung |
| 3 | Vorrichtung zur Ermittlung von Unterblock-Bewegungsvektoren aus Hauptblock-Bewegungsvektoren |

**Patentansprüche**

1. Verfahren zur Ermittlung von Bewegungsvektoren (Vaxbx), die einzelnen Bildbereichen (AxBx) eines Bildes zugeordnet sind, das folgende Verfahrensschritte umfasst:

   - Unterteilen des Bildes (Px) in eine Anzahl erster Hauptblöcke (Ax; A1) unter Verwendung eines ersten Blockrasters (R1) und Durchführen eines ersten Schätzverfahrens, um zu jedem ersten Block (Ax; A1)einen Bewegungsvektor (Vax; Va1) zur Verfügung zu stellen,

   - Unterteilen des Bildes wenigstens einmal in eine Anzahl weiterer Hauptblöcke (Bx; B1-B4) unter Verwendung eines weiteren Blockrasters (R2), dessen Lage gegenüber dem ersten Blockraster (R1) verschoben ist und Durchführen eines weiteren Schätzverfahrens, um zu jedem weiteren Hauptblock (Bx; B1-B4) einen Bewegungsvektor(Vbx; Vb1-Vb4) zur Verfügung zu stellen,

   - Unterteilen des Bildes in eine Anzahl Unterblöcke (AxBx; A1B1-A1B4), wobei jeder der Unterblöcke (AxBx; A1B1-A1B4) durch einen Überlappungsbereich zwischen einem der ersten Hauptblöcke (Ax; A1) und je einem der Hauptblöcke (B1-B4) des wenigstens einen weiteren Rasters (R2) gebildet ist und

   - Erzeugen eines Bewegungsvektors (Vaxbx; Va1b1-Va1b4) zu jedem Unterblock (AxBx; A1B1-A1B4) abhängig von den Bewegungsvektoren (Vax, Vbx; Va1,Vb1-Vb4) der dem jeweiligen Unterblock (AxBx; A1B1-A1B4) zugeordneten Hauptblöcke (Ax, Bx; A1,B1-B4).

2. Verfahren nach Anspruch 1, bei dem die Abmessungen der Hauptblöcke (Ax,Bx; A1,B1-B4) jeweils gleich sind.

3. Verfahren nach Anspruch 2, bei dem das Bild einmal in eine Anzahl weiterer Hauptblöcke unterteilt wird, wobei eine Verschiebung des weiteren Rasters (R2) gegenüber dem ersten Raster (R1) in horizontaler Richtung des Bildes der Hälfte der Abmessung (11) eines Hauptblockes (Ax, Bx) in horizontaler Richtung beträgt und wobei die Verschiebung des Rasters in vertikaler Richtung des Bildes der Hälfte der Abmessung (12) eines Hauptblockes (Ax, Bx) in vertikaler Richtung beträgt.

4. Verfahren nach einem der vorangehenden Ansprüche, bei dem zur Ermittlung des Bewegungsvektors (Vaxbx; Va1b1-Va1b4) des Unterblocks (AxBx; A1B1-A1B4) der Bewegungsvektor eines der Hauptblöcke (Ax, Bx; A1, B1-B4, die dem Unterblock (AxBx; A1B1-A1B4) zugeordnet sind, ausgewählt wird.

5. Verfahren nach Anspruch 4, bei dem bei den Schätzverfahren jeweils ein Gütemaß (Ga1) für jeden Bewegungsvektor (Va1) eines Hauptblockes (A1) ermittelt wird, wobei zur Ermittlung des Bewegungsvektors des Unterblocks (A1B1-A1B4) der Bewegungsvektor eines der Hauptblöcke A1, B1-B4) abhängig von dem Gütemaß (Ga1) ausgewählt wird.

6. Verfahren nach Anspruch 5, bei dem für jeden Bewegungsvektor (Va1) eines Hauptblockes (A1) ein Gütemaß (Ga1$_{B1}$, Ga1$_{B2}$, Ga1$_{B3}$, Ga1$_{B4}$) für jeden Unterblock (B1-B4) ermittelt wird, wobei zur Ermittlung des Bewegungsvektors (Va1b1-Va1b4) des Unterblocks (B1-B4) der Bewegungsvektor eines der Hauptblöcke (A1, B1-B4) abhängig von dem jeweiligen Gütemaß (Ga1$_{B1}$, Ga1$_{B2}$, Ga1$_{B3}$, Ga1$_{B4}$) ausgewählt wird.

7. Verfahren nach Anspruch 4, bei dem wenigstens ein Konvergenzkriterium für jeden Bewegungsvektor (Va1, Vb1-Vb4) eines Hauptblockes (A1, B1-B4) ermittelt wird, wobei zur Ermittlung des Bewegungsvektors (Va1b1-Va1b4) des Unterblocks (A1B1-A1B4) der Bewegungsvektor eines der Hauptblöcke (A1, B1-B4) abhängig von dem wenigstens einen Konvergenzkriterium ausgewählt wird.

8. Verfahren nach Anspruch 6, bei dem das wenigstens eine Konvergenzkriterium durch Vergleich des jeweiligen Bewegungsvektor (Va1) eines Hauptblockes (A1) mit wenigstens einem Bewegungsvektor (Va2, Va3) eines zu dem Hauptblock (A1) benachbarten Hauptblocks (A2, A3)in demselben Raster ermittelt wird.

9. Verfahren nach Anspruch 7, bei dem das wenigstens eine Konvergenzkriterium für einen Hauptblock (A1) des ersten Rasters (R1) durch Vergleich des dem einen Hauptblock (A1) zugeordneten Bewegungsvektors (Va1) mit einem zu dem einen Hauptblock (A1) links benachbarten Hauptblock (A2) und einem zugeordneten Bewegungsvektor (Va2, Va3) zu dem einen Hauptblock (A19 oberhalb benachbarten Hauptblock (A3) ermittelt wird und bei dem das wenigstens eine Konvergenzkriterium für einen Hauptblock (B1) des zweiten Rasters (R2) durch Vergleich des dem einen Hauptblock (B1) zugeordneten Bewegungsvektors (Vb1) mit einem zu dem einen Hauptblock (B1) rechts benachbarten Hauptblock (B3) zugeordneten Bewegungsvektor (Vb2, Vb3) und einem zu dem einen Hauptblock unterhalb benachbarten Hauptblock ermittelt wird.

10. Verfahren nach Anspruch 1, bei dem Vektorkomponenten des Bewegungsvektors (Va1b1c1) des Unterblock (A1B1C1) aus entsprechenden Vektorkomponenten der Bewegungsvektoren der Hauptblöcke (A1, B1, C1), die dem Unterblock (AxBx; A1B1-A1B4) zugeordnet sind, unter Anwendung einer Filterung ausgewählt werden.

11. Verfahren nach Anspruch 10, bei dem die Filterung eine Filterung mittels eines Ordered Statistical Filters, insbesondere eines Medianfilters ist.

12. Verfahren nach Anspruch 4,

- bei dem die Vektorbeträge der Bewegungsvektoren (Va1, Vb1, Vc1) der Hauptblöcke, die dem Unterblock (A1B1C1) zugeordnet sind, gebildet werden,

- bei dem die Vektorbeträge einer Filterung unterzogen werden, die einen der Vektorbeträge als Filterergebnis liefert, und

- bei dem der Bewegungsvektor des Hauptblockes ale Bewegungsvektor des Unterblockes ausgewählt wird, dessen Vektorbetrag als Filterergebnis erzeugt wurde.

13. Verfahren nach Anspruch 12 bei dem die Filterung eine Filterung mittels eines Ordered Statistical Filters, insbesondere eines Medianfilters ist.

14. Vorrichtung zur Ermittlung von Bewegungsvektoren, die einzelnen Bildbereichen eines Bildes zugeordnet sind, das folgende Verfahrensschritte umfasst:

- Mittel (1) zum Unterteilen des Bildes (Px) in eine Anzahl erster Hauptblöcke (Ax) unter Verwendung eines ersten Blockrasters (R19 und Mittel zum Durchführen eines ersten Schätzverfahrens, um zu jedem ersten Block (Ax) einen Bewegungsvektor (Vax) zur Verfügung zu stellen,

- Mittel (2) zum Unterteilen des Bildes (Px) wenigstens einmal in eine Anzahl weiterer Hauptblöcke (Bx) unter Verwendung eines weiteren Blockrasters (R2), dessen Lage gegenüber dem ersten Blockraster (R1) verschoben ist und Mittel zur Durchführen eines weiteren Schätzverfahrens, um zu jedem weiteren Hauptblock (Bx) einen Bewegungsvektor (Vbx) zur Verfügung zu stellen,

- Mittel zum Unterteilen des Bildes in eine Anzahl Unterblöcke (Ax,Bx), wobei jeder der Unterblöcke durch einen Überlappungsbereich zwischen einem der ersten Hauptblöcke und je einem der Hauptblöcke des wenigstens einen weiteren Rasters gebildet ist und

- Mittel zum Erzeugen eines Bewegungsvektors (Vaxbx) zu jedem Unterblock (AxBx) abhängig von den Bewegungsvektoren (Vax, Vbx) der dem jeweiligen Unterblock (AxBx) zugeordneten Hauptblöcke (Ax, Bx).

## FIG 1

## FIG 2

## FIG 3

B1
C1
R1
A1
R2
A1B1C1
R3

## FIG 4

1
Vax
3
S1
Vaxbx
2
Vbx